# EUROPÄISCHE PATENTSCHRIFT

(11) **EP 2 177 939 B1**
(45) Veröffentlichungstag und Bekanntmachung des Hinweises auf die Patenterteilung: **23.12.2015**
(21) Anmeldenummer: 09012921.4
(22) Anmeldetag: 13.10.2009
(51) Int. Cl.: G02B 6/32

(54) **Verbindungselement für optische Wellenleiter**
Connection element for optical waveguide
Elément de connexion pour guide d'ondes optique

(30) Priorität: 15.10.2008 DE 102008051661
(43) Veröffentlichungstag der Anmeldung: 21.04.2010
(73) Patentinhaber: Karlsruher Institut für Technologie, 76131 Karlsruhe (DE)
(72) Erfinder: Kühner, Thomas, 76470 Ötigheim (DE); Schneider, Marc, 76297 Stutensee (DE)

(56) Entgegenhaltungen:
- WO-A-01/14919
- DE-A1- 4 308 329
- DE-A1-102006 039 601
- GB-A- 2 399 652

## Beschreibung

Die Erfindung betrifft ein Verbindungselement für optische Wellenleiter wie z.B. optische Faser, Faserbündel, Leiterbahnen oder Kabel zur Übertragung von optischen Signalen gemäß des ersten Patentanspruchs. Durch das Verbindungselement werden mindestens zwei der Wellenleiter stirnseitig mechanisch verbunden und zur Herstellung einer optischen Verbindung in einer vorgegebenen Position fixiert.

Für eine zuverlässige Übertragung von optischen Signalen oder Informationen über größere Entfernungen wie beispielsweise in der Telekommunikation wird seit einiger Zeit eine verlustarme optische Signalübertragung mittels Lichtsignalen über Glasfasern eingesetzt. Die optische Verkabelung der einzelnen Einsteckkarten erfolgt jedoch meist über lose Glasfaserkabel und eingeschraubte Steckverbindungen.

Aber auch bei anderen Anwendungen, bei denen nur kurze Signaldatenübertragungswege zu überbrücken sind, gewinnt die optische Signalübertragung stetig an Bedeutung. Insbesondere ist es bei einer Nutzung von optischen Rückwandplatinen mit integrierten optischen Wellenleitern oder anderen optischen Schaltungen zwingend erforderlich, optische Signale auf engstem Raum umzulenken. Kopplungselemente mit Führungsmittel dienen dabei der einfachen Montage der Wellenleiter.

Aus der DE 10 2005 002 874 B3 ist ein optoelektronisches Bauelement mit integrierter Wellenleiter-Ankopplung von Fasern bekannt, wobei die vorgenannten Führungsmittel als V-förmige Nut für eine passiv justierende Aufnahme der Lichtleitfaser gestaltet sind.

Für eine verlustarme optische Übertragung ist auch die Integration fokussierender Optiken in der Umlenkung notwendig.

Eine Fokussierung wirkt einer Bildung von Streueffekten entgegen.

Die DE 10 2006 039 601 A1 offenbart ein optisches Koppelelement auf einer Leiterplatte. Das Koppelelement umfasst Umlenk-und Fokussierungsmittel für die Kopplung der optischen Signale. Aussparungen auf der Leiterplatte definieren die Lage der Lichtleitfasern zum Koppelelement.

Ferner wird in der DE 102 38 741 A1 eine optische Leiterplatte mit integrierter Umlenkkomponente (Spiegel) für optische Signale beschrieben. Bei dieser werden zur Verbesserung einer optischen Auskopplung der optischen Signale aus der Leiterplatte Linsenarrays als zusätzliche Komponente vorgeschlagen, vorzugsweise als Teil einer optischen Steckverbindung.

Generell erfordert eine Verbindung für optische Wellenleiter eine zuverlässige und exakte Justierung. Die bekannten Systeme gewährleisten dies im Rahmen von verschiedenen Konzeptionen, die jedoch nicht nur exakt zu fertigende dreidimensionale Mikrokomponenten, sondern oftmals auch ein aufwendiges Applizieren z.B. mit zusätzlichen Werkzeugen oder Klebestoffen erfordern.

Davon ausgehend liegt die **Aufgabe der Erfindung** darin, ein Verbindungselement für Enden von optische Wellenleitern zur Übertragung von optischen Signalen vorzuschlagen, deren Komponenten so konzipiert sind, dass sie mit mikrotechnischen Formgebungsverfahren zuverlässig, individuell und mit hoher Präzision herstellbar sind und zugleich eine einfache und damit ökonomische Applizierung ermöglichen.

Die Aufgabe wird mit einem Verbindungselement mit den Merkmalen des Anspruch 1 gelöst. Auf diesen rückbezogene Unteransprüche geben vorteilhafte Ausführungsformen des Verbindungselements wieder.

Das beanspruchte Verbindungselement dient der optischen und vorzugsweise auch mechanischen Verbindung von Wellenleiterenden zur Übertragung von optischen Signalen. Vorzugsweise ist mindestens ein Wellenleiterende im Verbindungselement fixiert, während verbleibende Wellenleiterenden in diesem vorzugsweise geführt sind. Die Übertragung umfasst dabei nicht nur eine unveränderte Weiterleitung von Signalen von einem zu einem anderen Wellenleiterende, sondern umfasst im Rahmen der Erfindung grundsätzlich jede Manipulation der optischen Signale während der Übertragung, beispielsweise Fokussierungen, Strahlteilungen, Filterungen und/oder Spiegelungen.

Das Verbindungselement ist modular aufgebaut, umfassend Trägerkomponenten, Führungskomponenten und optisch transparente Koppelelemente.

Die Trägerkomponente, sofern sie nicht mit mindestens einem der Führungskomponenten ein Teil bildet, dient als tragende Plattform für die Führungskomponenten und Koppelelemente und weist für Befestigungsmittel jener entsprechende Aufnahmen auf.

Die mindestens eine Führungskomponente, vorzugsweise zwei Führungskomponenten dienen insbesondere der Anbindung und Fixierung von Wellenleiterenden. Vorzugsweise umfassen die Führungskomponenten jeweils mindestens eine Aufnahme für eine und/oder mehrere Wellenleiterenden.

Die optisch transparenten Koppelelemente dienen einerseits der vorgenannten Weiterleitung der optischen Signale zwischen den Wellenleiterenden, andererseits aber auch der vorgenannten Manipulation der optischen Signale. Für den Ein- und Austritt der optischen Signale in und aus einem Koppelelement ist an diesem mindestens ein Ein- und ein Austrittsbereich vorgesehen. Ist ein Koppelelement für eine Manipulation der optischen Signale vorgesehen, weist dieses neben den Ein- und Austrittsbereichen vorzugsweise mindestens eine Reflexionsfläche, Spaltgitterfläche sowie fokussierende oder divergierende Linsenflächen für die optischen Signale auf.

Ein wesentliches Merkmal umfasst die Gestaltung der Führungsbauteile und der Koppelemente, vorzugsweise auch der Trägerkomponenten und auch weiterer Bauteile wie zusätzliche Halteclips für die genannten Komponenten und/oder Wellenleiter als aus einem Plattenmaterial wie ein Blech oder Folie heraus getrennte Komponenten. Vorzugsweise mit einem Schneidverfahren werden die Komponenten einem zweidimensionalen Schnittmuster folgend unter Bildung von Schnittflächen aus einem ebenen Plattenmaterial herausschnitten. Eine dreidimensionale Strukturierung der Komponenten, d.h. eine Bearbeitung der planparallelen Flächen des Plattenmaterials abseits der Schnitte ist wie eine Nacharbeitung der Schnittflächen im Rahmen der Erfindung nicht erforderlich, grundsätzlich aber als zusätzliche Gestaltungsmerkmale möglich. Vorzugsweise umfassen die Komponenten auch Befestigungsmittel für ein Zusammenstecken des Verbindungselements wie z.B. Rast- oder Steckverbindungen, die in der Konzeption mit im zweidimensionalen Schnittmuster bevorzugt als Rast- oder Stiftnasen sowie entsprechende Aussparungen an der jeweiligen Position in der Gegenkomponente (vorzugsweise Trägerkomponente) an den Komponenten vorgesehen sind.

Eine derartige Gestaltung ermöglicht in vorteilhafter Weise einen Einsatz mikrotechnischer Trenn- und Strukturierungsverfahren als Schneidverfahren und damit eine Miniaturisierung der genannten Komponenten mit sehr hoher Präzision und Güte. Die Form einer Komponente wird dabei vorzugsweise nur durch die planparallelen Flächen des Ausgangsmaterials und die Schnittflächen begrenzt. Vorzugsweise sind die Schnittflächen orthogonal zu den planparallelen Flächen des Ausgangsmaterials orientiert. Dabei weisen die Ein- und Austrittsbereiche und / oder Reflexionsflächen sowie Spaltgitterflächen vorzugsweise eine ebene oder im Falle Fokussierung oder Defokussierung eine vorzugsweise um eine Achse orthogonal zu den planparallelen Flächen gebogene Oberfläche (z.B. Zylinderform) auf.

Ein eingefärbtes optisch transparentes Plattenmaterial ist zudem als optisches Filterelement einsetzbar.

Vorzugsweise besteht das Plattenmaterial aus Kunststoff, das mit lithographischen Verfahren wie z.B. photonen- oder röntgenlithograpische oder photonen- oder bevorzugt röntgentiefenlithographische Verfahren (z.B. LIGA-Verfahren; LIGA steht für die Verfahrensschritte: Lithographie, Galvanik und Abformung, z.B. mittels einer Röntgen- oder Synchrotronstrahlenquelle) oder ein protonenlithographisches oder bevorzugt protonentiefenlithographsiches Verfahren (DLP: deep lithography with Protons, teilchenlithographisch) als Schneidverfahren präzises strukturierbar ist. Als Kunststoff eignet sich besonders PMMA (Plexiglas).

Vorzugsweise sind alle Ein- und Austrittsbereiche und / oder Reflexionsflächen sowie Spaltgitterflächen auf den Schnittflächen angeordnet.

Lithographisch Schneidverfahren zeichnen sich durch den Vorteil aus, dass die Schneideflächen sehr geringe Rauhigkeit und damit eine optische Oberflächengüte aufweisen. Die für eine ausreichende Güte erforderliche Oberflächenrauhtiefe liegt maximal bei 10%, vorzugsweise bei maximal 5% der zu übertragenden Lichtwellenlänge. Die Schneidflächen müssen selbst bei einer Verwendung für eine nicht streuende An- oder Durchstrahlung wie z.B. als Spiegelfläche und/oder Ein oder Austrittsbereich nicht mit einer die Rauhigkeit verringernde Nachbehandlung geglättet oder poliert werden.

Die Erfindung umfasst grundsätzlich auch Ausführungsformen bei Verwendung von Plattenmaterial mit veränderlicher, beispielsweise keilförmiger oder abgestufter Stärke oder nicht zueinander planparallelen Flächen.

In den Aufnahmen erfolgt eine Führung und/oder Fixierung der Wellenleiterenden in Führungsmitteln bzw. Fixierungsmitteln.

In einer Ausführung werden die Wellenleiterenden in die Führungsnut (z.B. V-Nut) zentrierend eingesetzt und durch eine Klemmung, vorzugsweise mittels Clipverbindungen als Fixierungsmittel oder aber durch Klebung in der Lage fixiert. Dies schließt eine Klemmung des Wellenleiters im Führungsbauteil durch einrastende und damit sich verformende Bestandteile des Befestigungsmittel, z.B. Rastnasen mit Führungsmittel (Führungsnut, Führungsflächen) nicht aus.

In einer weiteren Ausführung werden Wellenleiterenden zwischen Führungsflächen als Führungsmittel in den Führungsbauteilen eingeschoben. Eine weitere Führung erfolgt durch ein Durchschieben der Wellenleiterenden an das Koppelelement, wobei das Koppelelement einen zusätzlichen Anschlag und damit eine Führung für die Wellenleiterenden darstellt. Vorzugsweise kreuzen sich die die Flächenorientierungen der Führungsflächen mit der des Koppelelements.

Die Erfindung umfasst somit einen dreidimensionalen Aufbau eines Koppelelements aus Komponenten mit zweidimensionalem Grundriss, die sowohl mechanische als auch optische Funktionselemente beinhalten, wobei die zweidimensionalen Grundstrukturen vorzugsweise aus einheitlichem Material gleicher Dicke hergestellt ist. Die Verbindung zwischen den Komponenten besteht aus angeformten Klemm- oder Steckelementen, die im Gegensatz zu Klebverbindungen eine sofortige mechanische Stabilität und Einsetzbarkeit des Verbindungselements ermöglichen und sich damit für eine Serienfertigung z.B. in optischen Schaltungen eignen. Außerdem entfällt damit die Gefahr einer Veränderung von optischen Eigenschaften durch unkontrolliertes Einwirken von fluidischen Bindemitteln z.B. von Klebstoff, was insbesondere bei der Fertigung von mikrooptischen Systemen einen signifikanten Vorteil darstellt.

Die komplexe dreidimensionale Struktur des Verbindungselements wird durch Zusammensetzen der vorgenannten Komponenten erreicht, so dass auch Hohlräume und Oberflächen mit optischer Funktion innerhalb der Struktur erzeugt werden können. Die einzelnen Komponenten weisen vorzugsweise prismatische oder rechteckige Querschnitte auf, d.h. ihr zweidimensionaler Grundriss folgt dem vorgenannten Schnittmuster, das sich in die Höhe fortgesetzt.

Die Verbindung der Komponenten untereinander erfolgt mechanisch in vorgenannter Weise ohne Kleber oder Lote. Die genannten Rastnasen einer Rastverbindung sind vorzugsweise paarweise und symmetrisch gegeneinander ausgerichtet ausgeführt, so dass in vorteilhafter Weise Maßtoleranzen wie Dicketoleranzen des Plattenmaterials in der Rastverbindung durch elastische Nachgiebigkeit ausgeglichen werden und so eine präzise Ausrichtung der Einzelteile untereinander auch bei Maßabweichungen gegeben ist. Vorzugsweise umfassen Rastverbindungen nicht nur Rastnasen als Verbindungselemente, sondern zusätzlich auch Zentriermittel wie Stufenanschläge oder andere Zentrierstrukturen.

Die Erfindung wird im Folgenden anhand eines Ausführungsbeispiels mit Figuren näher erläutert. Es zeigen
**Fig.1** diese Ausführungsform in einer ersten perspektivischen Ansicht,
**Fig.2** die Ausführungsform in perspektivischer Explosionsdarstellung,
**Fig.3** eine Ansicht eines optisch transparenten Koppelelements mit nach innen wirkenden Rastnasen,
**Fig.4** eine Ansicht eines optisch transparenten Koppelelements mit nach außen wirkenden Rastnasen,
**Fig.5** eine weitere perspektivische Darstellung der Ausführungsform sowie
**Fig.6** eine seitliche Ansicht des Koppelelements in der dargestellten Ausführungsform.

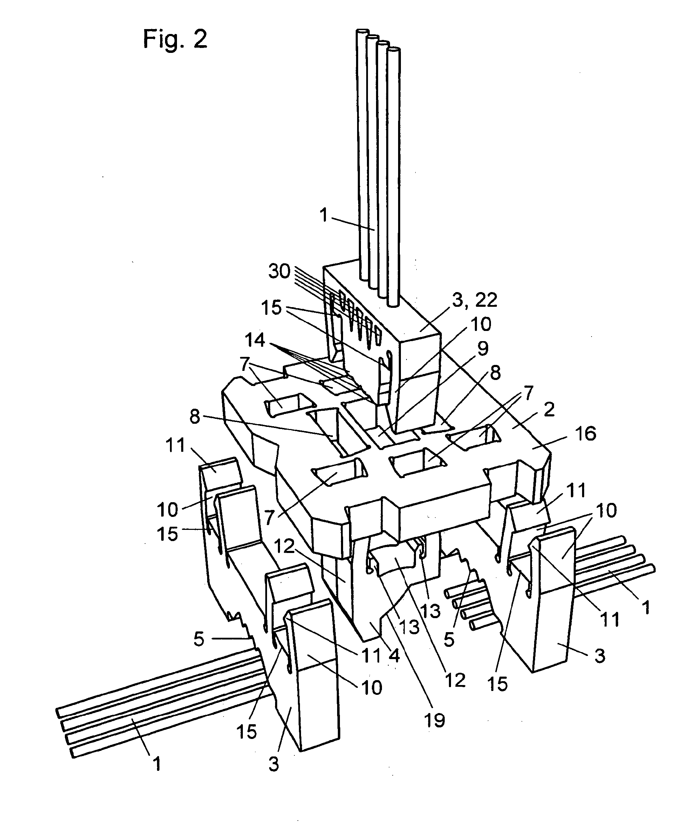

**Fig.1** zeigt ein Ausführungsbeispiel eines Verbindungselements für Enden von optischen Wellenleitern **1**, im Beispiel jeweils durch ein Band aus mehreren (im Beispiel vier) parallelen Einzelglasfasern (Wellenleitergruppen) gebildet. Alternativ sind im Rahmen des Ausführungsbeispiels anstelle der Einzelfasern auch Glasfaserbündel oder mehrere parallele Glasfaserbündel (wiederum als Bündel oder als Band) möglich. Das Verbindungselement umfasst eine Trägerkomponente **2** für die Aufnahme von drei Führungskomponenten **3** sowie einem transparenten Koppelelement **4**. Im Beispiel sind je eine Wellenleitergruppe pro Führungskomponente **3** vorgesehen.

Im Rahmen des Ausführungsbeispiels ist das Verbindungselement aus den genannten Einzelelementen zusammengesteckt, wobei die Einzelelemente alle eine prismatische Form haben und mit einem zweidimensionalen Muster aus einem Plattenmaterial vorzugsweise mit einheitlicher Schichtdicke herausgeschnitten sind. Das Plattenmaterial ist vorzugsweise aus Kunststoff, der sich vorzugsweise mit einem röntgenlithographischen Verfahren der vorgenannten Art als Schneidverfahren bearbeiten lässt.

Das Koppelement **4** dient der optischen Umlenkung, Weiterleitung und Manipulation von optischen Signalen zwischen den Enden der Wellenleitern **1** oder Wellenleiterbündeln insbesondere aus unterschiedlichen Führungskomponenten **3**.

Zwei der Wellenleiterbündel dienen im Ausführungsbeispiel der definierten mechanischen Auflage **5** des Verbindungselements. Vorzugsweise sind diese Teil einer optischen Leiterplatte und ragen von zwei Seiten in eine Öffnung dieser Leiterplatte hinein. Die Positionierung des Verbindungselements erfolgt durch vorzugsweise formschlüssiges Aufsetzen von Führungsstrukturen **6** in den Führungskomponenten **3** auf die mechanische Auflage (Wellenleiterbündel). Die Führungsstrukturen umfassen vorzugsweise eine V-förmige Einformung in den Führungskomponenten, in die eine Auflage **5** beim Aufsetzen des Verbindungselements schwerkraftgetrieben in eine eindeutige, formschlüssige und stabile Lage geführt wird.

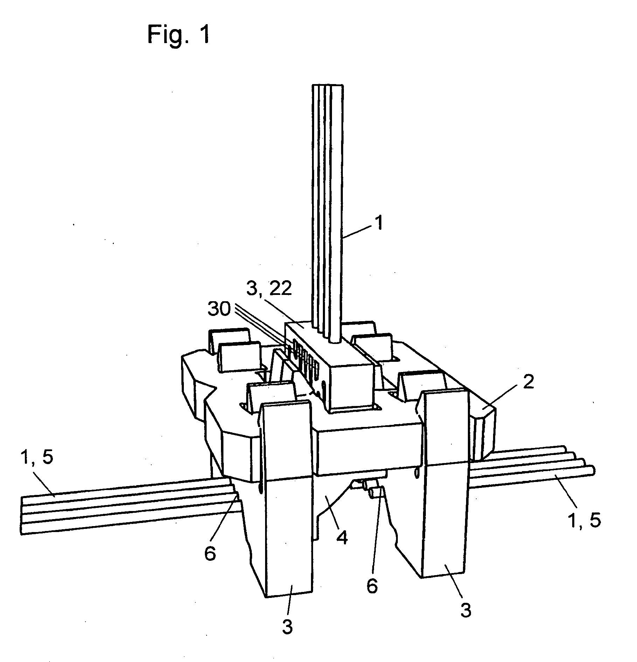

**Fig.2** zeigt eine Explosionsdarstellung der Ausführungsform gem. **Fig.1****.** Die Trägerkomponente zeigt eine Vielzahl von in der Explosionsdarstellung besonders gut erkennbaren Haltenasendurchbrüchen **7** und **8** und der Durchbrüche **9**. Die Haltenasendurchbrüche **7** und **8** dienen der Aufnahme von Haltenasen **10** mit Rasthaken **11** als Clipverbindung der Führungskomponenten **3** bzw. des Koppelements **4**. Die Durchbrüche **9** dienen einem Durchschieben der oberen Führungskomponente **3** an die obere Koppelfläche **12** des Koppelelements **4**.

Die Montage des dargestellten Verbindungselements erfolgt durch Einschieben der Haltenasen **10** vorzugsweise zunächst des Koppelelements **4**, anschließend der Führungskomponenten **3** durch die Haltenasendurchbrüche **7** bzw. **8**, bis der mechanische Anschlag **13** bzw. die Anschlagsflächen **15** auf den planparallelen Flächen **16** der Trägerkomponente **2** aufliegen und die Rasthaken **11** der Haltenasen **10** nach Durchtritt durch der Haltenasendurchbrüche **7** und **8** einrasten. Durch passende Anordnung und Kombination der Aufnahmebereiche (Haltenasendurchbrüche und Haltenasen mit Rasthaken und Anschlagsflächen) der vorgenannten Einzelelemente lassen sich optisch und mechanisch wirksame Flächen wie z.B. Spiegelflächen oder die vorgenannten Koppelflächen **12** sowie deren Ausrichtung zu den Wellenleiterenden in jeder beliebigen Raumrichtung erzeugen.

Die Führungs- und Koppelelemente **3** bzw. **4** sind im Rahmen des Ausführungsbeispiels mit paarweise spiegelsymmetrisch angeordneten Haltenasen **10** und Rasthaken **11** ausgestattet. Eine bevorzugte Trapezform der Haltenasendurchbrüche **7** und **9** stellt eine spielfreie Positionierung (Zentrierung) der einzurastenden Einzelelemente auf der Trägerkomponente und damit auch untereinander auch bei gewissen Dickenabeichungen dieser Einzelelemente sicher. Eine Verklebung oder Verschweißung der Einzelelemente ist nicht erforderlich.

**Fig.1** **und** **2** zeigen zudem als beispielhafte Ausführungsvariante ein transparentes Führungselement **22** als Führungselement **3**. Es weist eine Anzahl zum Koppelelement hin gerichtete zylindrische gekrümmte Linsenflächen **4** (je eine pro Einzelglasfaser im Wellenleiter) pro optische Durchtrittsflächen sowie eine Anzahl von Aussparungen **30** auf, wobei in den Zwischenräumen zwischen den Aussparungen die von den Wellenleiterenden in das Führungselement **22** einstrahlende optische Signale zu den Linsenkörpern hin geleitet werden. Dabei bilden das Material zwischen den Durchbrüchen die optischen Verläufe der einzelnen optischen Kanäle, wobei durch den Brechungsindexunterschied zwischen dem transparenten Material des Führungselements **22** und dem umgebenden Medium (Luft) für eine Totalreflexion und damit für eine bessere Kanaltrennung der einzelnen optischen Kanäle sorgen. Die von oben in das Führungselement **22** ausmündenden Wellenleiter werden durch geeignete Mittel geführt, vorzugsweise durch Führungsvertiefungen (mit optischen Durchtrittsflächen in den Vertiefungsböden) in der oberen Fläche des transparenten Führungselements. Alternative Mittel umfassen separate, nicht explizit dargestellte Komponenten auf einer dann vorzugsweise planen Oberfläche (optische Durchtrittsfläche) des oberen Führungselements **22** wie z.B. Lochplatten oder Klemmmittel. Ein derartiges transparentes Führungselement nimmt dann die Funktion eines weiteren Koppelelements der vorgenannten Art ein.

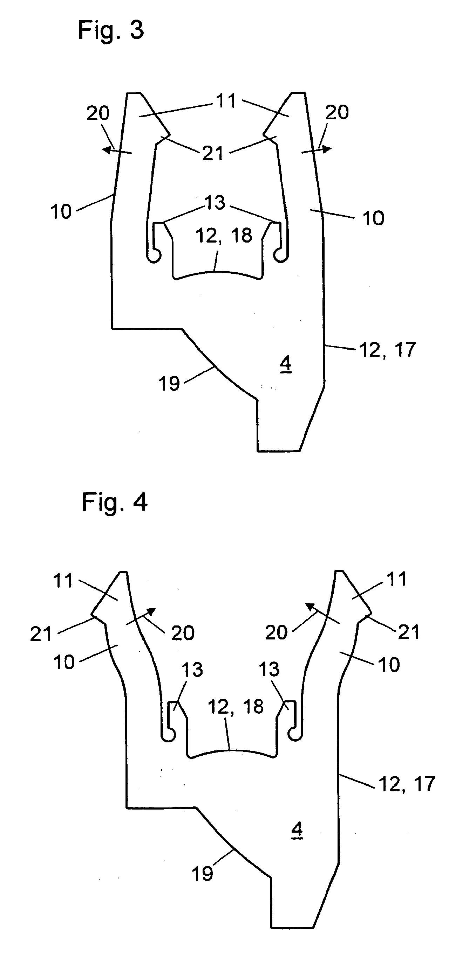

**Fig.3 und 4** zeigen je eine ein Koppelelement **4** zur optischen Umlenkung um 90° und gleichzeitigen Fokussierung senkrecht zur Zeichenebene. Während **Fig.3** eine Variante mit nach innen weisenden Rastnasen **11** offenbart, weisen jene in **Fig.4** nach außen. Die optischen Koppelflächen **12** umfassen eine plane und gewölbte optische Durchtrittsfläche **17** bzw. **18.** Die plane Durchtrittsfläche **17** eignet sich zudem besonders als mechanischer Anschlag für die Wellenleiterenden (vgl. **Fig.1** **und** **2**), während eine gewölbte Durchtrittsfläche als Zylinderlinse für eine Fokussierung nutzbar ist. Eine weitere Fokussierung und die eigentliche optische Strahlumlenkung erfolgt im Ausführungsbeispiel mit einem planen oder gewölbten Hohlspiegel **19.** Lässt der Einfallswinkel eines optischen Signals auf dem Hohlspiegel eine Totalreflexion nicht zu, sodass es zu einem Austritt zumindest eines Teils des optischen Signals kommt, ist eine Verspiegelungsschicht auf dem Hohlspiegel zur Vermeidung dieses Austritts erforderlich. Grundsätzlich ist der Hohlspiegel ohne diese Verspiegelungsschicht auch als Strahlungsteiler oder Strahlungsweiche einsetzbar, wobei im Rahmen des dargestellten Koppelelements ein Teil des optischen Signals das Koppelelement über die Hohlspiegelfläche verlässt.

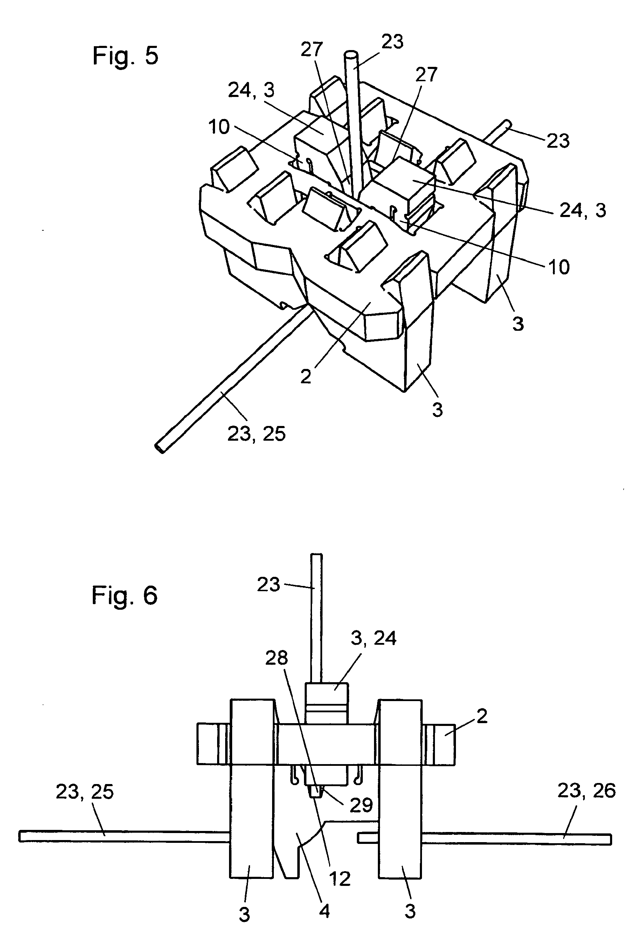

Beim Einschieben der Haltenasen **10** in die Haltenasendurchbrüche werden die Haltenasen zunächst auseinander gebogen (Ausführungsform **Fig.3****,** Biegerichtung **20**) oder zusammengedrückt (Ausführungsform **Fig.4****,** Biegerichtung **20**) und federn beim Einrasten der Rastnasen **11** nach dem Durchschieben durch die Haltenasendurchbrüche soweit wie möglich zurück. Durch die schräge Fläche **21** der Rastnasen werden Dickentoleranzen der Trägerkomponente um die Halenasendurchbrüche, in das eingerastet wird, ausgeglichen. Ferner dienen die schrägen Flächen **21** dazu, die nach innen (**Fig.3**) oder außen (**Fig.4**) wirkenden Kraft der Haltenasen in eine Kraft in Richtung der mechanischen Anschläge **13** umzuwandeln, um so eine spielfreie Rastverbindung herzustellen. Die symmetrische Anordnung der Haltenasen mit Haltenasen und Rasthaken gewährleistet ferner einen Toleranzausgleich, wenn der Abstand der Gegenlager in den Haltenasendurchbrüchen für die Haltenasen z.B. aufgrund von relativen Fertigungsungenauigkeiten, wie in der Mikrosystemtechnik üblich, variiert. Eine Erhöhung der Stabilität einer Rastverbindung ist, wie in **Fig.1** **und** **2****,** aber auch in **Fig.6** dargestellt, durch mehrere Paare von Haltenasen mit Rashaken realisierbar, wobei jene vorzugsweise jeweils paarweise spiegelsymmetrisch zueinander angeordnet sind.

**Fig.5 und 6** zeigen ein spezielles Ausführungsbeispiel eines mikrooptischen Verbindungselements für Enden von optischen Einzelfasern **23** in perspektivischer und seitlicher Ansicht. Die Ausführungsform dient der optischen Umlenkung und Weiterleitung von optischen Signalen zwischen der vertikale in der Klemmführungskomponente **24** eingeklemmten Einzelfaser und der in den Figuren nach links weisenden Einzelfaser **25.** Eine weitere nach rechts weisende Einzelfaser **26**, die mit Glasfaser **25** fluchtet, dient der definierten mechanischen Auflage des mikrooptischen Bauteils. Konzeptionell unterscheidet sich diese Ausführung von der in **Fig.1** **und** **2** dargestellte Ausführungsform durch eine Anpassung der mechanischen Auflage **5** an die Einzelfasern sowie in der der Ausgestaltung der oberen Führungskomponente **3** als Klemmführungskomponente **24**. Diese Klemmführungskomponente wird mit beim einrastenden Einsetzen in die Trägerkomponente **2** über die Haltearme **10** zusammengedrückt, wodurch die eingesetzte Einzelfaser zwischen zwei Klemmflächen **27** geführt und/oder eingespannt wird. Das Koppelelement **4** dient dabei nicht nur mit der optischen Koppelfläche **12** als Anschlagsfläche für das Einzelfaserende **28**, sondern auch als seitliche Führung mittels einer trapezförmigen Führungsnut **29** parallel zu den Klemmflächen **27** (vgl. **Fig.6**).

## Patentansprüche

1. Verbindungselement für Enden von optischen Wellenleitern **(1, 23, 25)** zur Übertragung von optischen Signalen, umfassend
a) mindestens eine Trägerkomponente **(2)**,
b) mindestens eine Führungskomponente **(3, 22)**, umfassend jeweils mindestens eine Aufnahme für ein Wellenleiterende,
c) mindestens ein optisch transparentes Koppelelement **(4)** mit mindestens einem Ein- und einem Austrittsbereich **(12, 17, 18)** für die optischen Signale sowie
d) Befestigungsmittel **(7, 8, 10, 11)** für die Führungskomponenten und Koppelelement an die Trägerkomponente,
**dadurch gekennzeichnet, dass**
e) die Führungsbauteile, das Koppelement sowie die Trägerkomponente mit einem Schneidverfahren jeweils einem zweidimensionalen Schnittmuster unter Bildung von Schnittflächen folgend aus einem ebenen Plattenmaterial herausschnitten sind sowie
f) die Befestigungsmittel **(7, 8, 10, 11)** Rastverbindungen mit jeweils zwei elastische Haltenasen sowie mindestens einem mechanischen Anschlag sind, wobei die beiden Haltenasen symmetrisch gegeneinander ausgerichtet und ausgeführt sind und jeweils eine gegen den mechanischen Anschlag wirkende schräge Fläche aufweisen.

2. Verbindungselement nach Anspruch 1, **dadurch gekennzeichnet, dass** das Koppelelement **(4)** mindestens eine Reflexionsfläche **(19)** oder Spaltgitterfläche für die optischen Signale aufweist.

3. Verbindungselement nach Anspruch 1 oder 2, **dadurch gekennzeichnet, dass** die Ein- und Austrittsbereiche **(12, 17, 18)** und / oder Reflexionsflächen **(19)** sowie Spaltgitterflächen eine ebene oder gebogene Oberfläche aufweisen.

4. Verbindungselement nach einem der vorgenannten Ansprüche, **dadurch gekennzeichnet, dass** die Ein- und Austrittsbereiche und / oder Reflexionsflächen sowie Spaltgitterflächen auf den Schnittflächen angeordnet sind und eine optische Oberflächengüte aufweisen.

5. Verbindungselement nach einem der vorgenannten Ansprüche, **dadurch gekennzeichnet, dass** das Plattenmaterial aus Kunststoff besteht und das Schneidverfahren ein röntgen- oder teilchenlithographisches Verfahren ist.

6. Verbindungselement nach einem der vorgenannten Ansprüche, **dadurch gekennzeichnet, dass** die Aufnahme Führungs- und Fixierungsmittel für die Wellenleiterenden umfasst.

7. Verbindungselement nach Anspruch 6, **dadurch gekennzeichnet, dass** die Fixierungsmittel Clips umfassen.

8. Verbindungselement nach Anspruch 6, **dadurch gekennzeichnet, dass** die Führungsmittel Führungsflächen in den Führungsbauteilen umfassen, wobei das Koppelelement einen zusätzlichen Anschlag für die Wellenleiterenden darstellt.

## Claims

1. Connecting element for ends of optical waveguides (1, 23, 25) for transferring optical signals, comprising
a) at least one support component (2),
b) at least one guide component (3, 22), comprising in each case at least one retainer for a waveguide end,
c) at least one optically transparent coupling element (4) with at least one inlet region and one outlet region (12, 17, 18) for the optical signals, and
d) securing means (7, 8, 10, 11) for the guide components and coupling element to the support component,
**characterised in that**
e) the guide components, the coupling element, and the support components are in each case cut out by a cutting process in a two-dimensional cutting pattern with the formation of cutting areas from a flat sheet material, and
f) the securing means (7, 8, 10, 11) are latch connections, in each case with two elastic retaining lugs and at least one mechanical latch, wherein the two retaining lugs are symmetrically aligned against each other and in each case a slanted surface taking effect against the slanted surface.

2. Connecting element according to claim 1, **characterised in that** the coupling element (4) comprises at least one reflection surface (19) or slit grating surface for the optical signals.

3. Connecting element according to claim 1 or 2, **characterised in that** the inlet and outlet regions (12, 17, 18) and/or reflection surfaces (19) and split grating surfaces present a flat or curved surface.

4. Connecting element according to any one of the preceding claims, **characterised in that** the inlet and outlet regions and/or reflection surfaces and split grating surfaces are arranged on the cut surfaces and present an optical surface quality.

5. Connecting element according to any one of the preceding claims, **characterised in that** the sheet material consists of plastic, and the cutting process is an X-ray or particle lithographic process.

6. Connecting element according to any one of the preceding claims, **characterised in that** the retainer comprises guide and fixing means for the waveguide ends.

7. Connecting element according to claim 6, **characterised in that** the fixing means comprise clips.

8. Connecting element according to claim 6, **characterised in that** the guide means comprise guide surfaces in the guide components, wherein the coupling element represents an additional latch for the waveguide ends.

## Revendications

1. Elément de liaison pour les extrémités de guide d'ondes optiques (1, 23, 25) pour transmettre des signaux optiques ayant,
a) au moins un composant de support (2),
b) au moins un composant de guidage (3, 22) ayant au moins un logement pour une extrémité de guide d'ondes,
c) au moins un élément de couplage (4) transparent optiquement, ayant un au moins une zone d'entrée et une zone de sortie (12, 17, 18) pour les signaux optiques ainsi que,
d) des moyens de fixation (7, 8, 10, 11) pour les composants de guidage et l'élément de couplage sur le composant de support,
**caractérisé en ce que**
e) les composants de guidage, l'élément de couplage et les composants de support sont découpés dans un matériau en plaque, plane, en formant des surfaces de coupe qui suivent un motif de coupe à deux dimensions, et
f) les moyens de fixation (7, 8, 10, 11) sont des liaisons par accrochage avec chaque fois deux becs de fixation élastiques et au moins une butée mécanique, les deux becs de fixation étant orientés et symétriques l'un par rapport à l'autre et ayant respectivement une surface inclinée coopérant avec la butée mécanique.

2. Elément de liaison selon la revendication 1,
**caractérisé en ce que**
l'élément de couplage (4) a au moins une surface de réflexion (19) ou une surface de réseau à fentes pour les signaux optiques.

3. Elément de liaison selon la revendication 1 ou 2,
**caractérisé en ce que**
les zones d'entrée et de sortie (12, 17, 18) et/ou les surfaces de réflexion (19) ainsi que les surfaces de réseaux à fentes sont une surface plane ou courbe.

4. Elément de liaison selon l'une des revendications précédentes,
**caractérisé en ce que**
les zones d'entrée et de sortie et/ ou les surface de réflexion ainsi que les surfaces de réseaux à fentes se trouvent sur les surfaces de coupe et ont une surface de qualité optique.

5. Elément de liaison selon l'une des revendications précédentes,
**caractérisé en ce que**
le matériau en forme de plaque est une matière plastique et le procédé de coupe est un procédé de lithographique aux rayons X ou à particules.

6. Elément de liaison selon l'une des revendications précédentes,
**caractérisé en ce que**
le logement comporte des moyens de guidage et de blocage pour les extrémités des guides d'ondes.

7. Elément de liaison selon la revendication 6,
**caractérisé en ce que**
le moyen de fixation comporte des pinces élastiques.

8. Elément de liaison selon la revendication 6,
**caractérisé en ce que**
les moyens de guidage comportent des surfaces de guidage dans les composants de guidage, l'élément de couplage constituant une butée supplémentaire pour les extrémités des guides d'ondes.
